**Europäisches Patentamt**

**European Patent Office**

**Office européen des brevets**

(19)

(11) Veröffentlichungsnummer: **0 305 772 B1**

## (12) EUROPÄISCHE PATENTSCHRIFT

(45) Veröffentlichungstag der Patentschrift: **02.03.94**

(21) Anmeldenummer: **88112868.0**

(22) Anmeldetag: **08.08.88**

(51) Int. Cl.⁵: **H04N 7/00**

(54) **Verfahren zum Wiedergewinnen von Binärinformationen aus einem störbehafteten Basisbandsignal sowie Anordnung.**

(30) Priorität: **02.09.87 DE 3729235**

(43) Veröffentlichungstag der Anmeldung:
**08.03.89 Patentblatt 89/10**

(45) Bekanntmachung des Hinweises auf die
Patenterteilung:
**02.03.94 Patentblatt 94/09**

(84) Benannte Vertragsstaaten:
**AT BE CH DE FR GB IT LI LU NL SE**

(56) Entgegenhaltungen:
**EP-A- 0 282 106**

**RUNDFUNKTECHNISCHE MITTEILUNGEN
Band 29, Nr. 5, 1985, Seiten 229-246; C.
DOSCH: "D- UND D2-MAC/PAKET - Die Mitglieder der MAC-Fernsehstandardfamilie mit
geschlossener Basisbanddarstellung"**

(73) Patentinhaber: **ANT Nachrichtentechnik GmbH
Gerberstrasse 33
D-71522 Backnang(DE)**

(72) Erfinder: **Drinda, Klaus, Dipl.-Ing.
Tannenweg 12
D-7150 Backnang(DE)**

**Beschreibung**

Die Erfindung geht aus von einem Verfahren gemäß dem Oberbegriff des Patentanspruchs 1. Ein solches Verfahren, bzw. eine auf einem solchen Verfahren basierende Anordnung, ist bekannt aus Rundfunktechnische Mitteilungen, Jahrgang 29 (1985), Heft 5, Seiten 229 - 246.

Bei der Anordnung gemäß Rundfunktechnische Mitteilungen s.o. wird der D2-Anteil in einem D2-MAC-Signal mittels eines Duobinärdecoders wiedergewonnen.

Aus der älteren nicht vorveröffentlichten EP 282 106 A1 ist ein Verfahren bekannt zum Wiedergewinnen von Binärinformationen aus einem störbehafteten Basisbandsignal, welches aus einem ursprünglich zu seiner Grundlinie symmetrischen Datenburst und einem weiteren Signalanteil zusammengesetzt ist, dessen Amplitude größere unsymmetrische Werte annehmen kann als der Datenburst. Es wird dort eine Spitzenwertdetektion des Datenbursts bezüglich positiver und negativer Amplitudenwerte vorgenommen und aus der Spitzenwertdetektion ein Regelsignal abgeleitet. Der Mittelwert zwischen positivem und negativem Amplitudenspitzenwert des Datenbursts wird auf einen vorgegebenen Bezugswert geregelt und das Regelsignal für die Zeiten, in denen Amplitudenwerte auftreten, die höher sind als die Amplitudenwerte des Datenbursts, annähernd auf dem vorherigen Wert gehalten. Die Spitzenwertdetektion wird über einen Inhibit-Befehl außerhalb der Duobinärsignale im Basisband so gesteuert, daß solche Signalwerte in die Bewertung nicht eingehen.

Aufgabe der Erfindung ist es, ausgehend vom Oberbegriff des Patentanspruchs 1, ein Verfahren anzugeben, welches die Lage des Datenbursts bezüglich der Entscheiderschwelle/n bei der Decodierung optimal ausrichtet. Außerdem soll eine Anordnung zum Durchführen dieses Verfahrens aufgezeigt werden. Diese Aufgabe wird bezüglich des Verfahrens durch die Merkmale des Patentanspruchs 1 gelöst. Die weiteren Patentansprüche zeigen Weiterbildungen des Verfahrens bzw. eine Anordnung und deren Weiterbildung auf. Aus der DE-A-29 05 903 ist es an sich bekannt, zur Amplituden- und Grundlinienstabilisierung eines Digitalsignals einen Regelverstärker vorzusehen, dem als Gegenkopplungssignal die über eine Additionsstufe verknüpften Amplitudenspitzenwerte seines Ausgangssignals zugeführt werden. Diese Anordnung eignet sich jedoch nicht zur Grundlinienstabilisierung des Datenburst in einem zusammengesetzten störbehafteten Basisbandsignal, beispielsweise eines D2-MAC-Signals, bezüglich der Entscheiderschwellen eines Duobinär-Binärwandlers und gibt auch keine Anregung hinsichtlich der Auswertung zusammengesetzter Signale.

Die Erfindung geht von der Erkenntnis aus, daß bisherige Verfahren und Anordnungen zum Wiedergewinnen von Binärinformationen nicht optimal sind, insbesondere bei der Dekodierung verrauschter D2-MAC-Signale mit überlagerter dynamischer Trägerenergieverwischung. Da in einem D2-MAC-Signal Amplitudenspitzenwerte des MAC-Anteils auftreten können, die höher sind als die Amplitude des D2-Datenbursts, läßt sich eine herkömmliche Grundlinienstabilisierung nicht verwenden. Durch die Maßnahmen der Erfindung, insbesondere durch die Optimierung des D2-Signals bezüglich der Entscheiderschwellen mittels einer adaptiven Nachregelung läßt sich eine Verbesserung hinsichtlich der Erzeugung der Klemmimpulse erreichen. Die Klemmung arbeitet auch noch bei C/N-Werten von 2 dB zuverlässig (C/N = Carrier to Noise Ratio).

Die Erfindung wird nun anhand eines Ausführungsbeispieles näher erläutert. Es zeigen

Fig. 1      eine schematische Darstellung eines D2-MAC-Signals während einer Zeilenperiode und

Fig. 2      ein Prinzipschaltbild einer Anordnung zum Durchführen des Verfahrens.

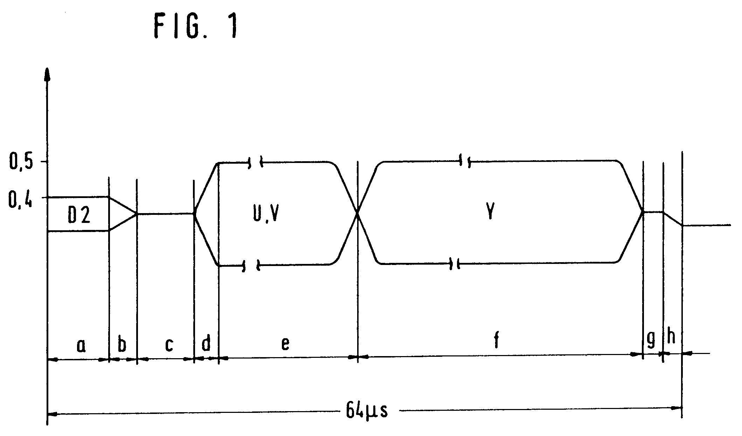

Das zusammengesetzte Basisbandsignal, aus dem die Binärinformation wiedergewonnen werden soll, sei beispielsweise ein D2-MAC/Paket-Signal, welches als Übertragungssignal für Fernsehsatelliten vorgesehen ist. Den Aufbau dieses D2-MAC/Paket-Signals für eine Zeilenperiode zeigt Fig 1. Während des Zeitabschnitts a werden duobinär codierte digitale Signale übertragen, welche die Zeilensynchronisierung, Tonkanäle und weitere Daten beinhalten. Der Zeitabschnitt b ist ein Übergangszeitabschnitt zum Ausschwingen des Datenbursts, an den sich der Zeitabschnitt c anschließt. Dieser Zeitabschnitt c wird als Klemmperiode bezeichnet. Die Klemmperiode enthält einen analogen Nullreferenzwert der Farbdifferenzsignale. Auf diesen Bezugswert erfolgt die Regelung des Datenbursts - D2-Anteil - beim Verfahren nach der Erfindung. Der Zeitabschnitt d stellt wieder einen Übergangszeitabschnitt dar, an den sich der Zeitabschnitt e anschließt. Während des Zeitabschnitts e werden zeilenweise abwechselnd die komprimierten Farbdifferenzsignale U und V übertragen. Die Leuchtdichteinformation Y wird im Zeitabschnitt f übertragen mit Übergang zum Klemmpegel -Zeitabschnitt g - am Ende der Leuchtdichteinformation. Vom Klemmpegel erfolgt während des Zeitabschnitts h der Übergang zum Datenburst.

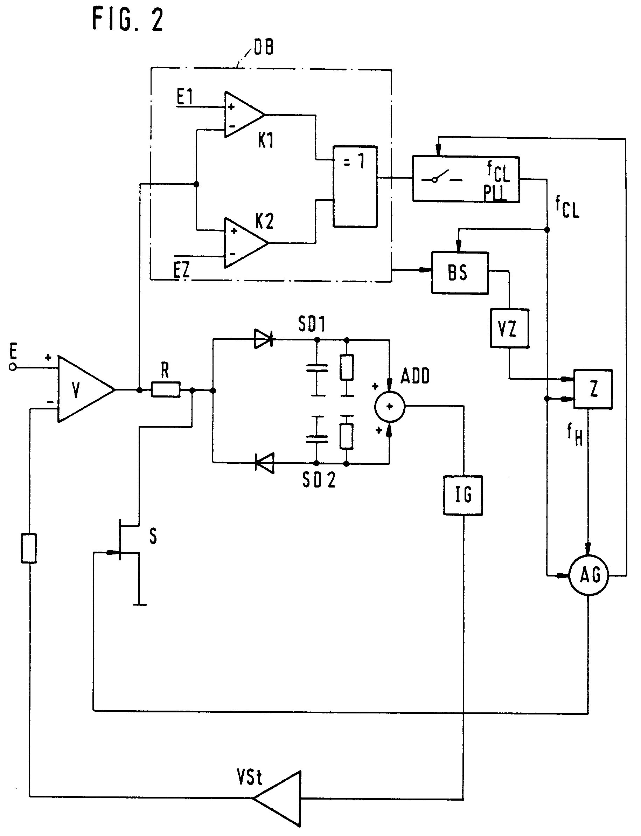

In Fig. 2 ist eine Anordnung zum Durchführen des erfindungsgemäßen Verfahrens dargestellt. Dem Eingang E des Regelverstärkers V wird das empfangene verrauschte D2-MAC-Signal mit überlagerter Trägerenergieverwischung zugeführt. Die Trägerenergieverwischung wird senderseitig beispielsweise durch ein Dreiecksignal mit einer Periodendauer synchron zum Bildsignal erreicht (vgl. Rundfunktechnische Mitteilungen, Jahrgang 29 (1985) Heft 5, Seite 238). Der Ausgang des Regelverstärkers V ist mit Spitzenwertdetektoren SD1 und SD2 jeweils für positive und negative Amplitudenwerte des D2-MAC-Signals verbunden. Die Ausgangssignale der Spitzenwertdetektoren SD1 und SD2 werden über einen Addierer ADD derart miteinander verknüpft, daß am Ausgang des Addierers der Mittelwert zwischen positivem und negativem Amplituden-Spitzenwert des Datenbursts erscheint. Dem Addierer ADD ist ein Integrator IG und gegebenenfalls ein Verstärker VSt nachgeschaltet. Die Zeitkonstante dieses Integrators IG ist so gewählt, daß die Umladung des im Integrator IG befindlichen kapazitiven Elementes der Trägerverwischung folgen kann, d.h. beispielsweise $\tau < 20$ ms. Das Ausgangssignal des Integrators, bzw. ein dazu proportionales Signal, wird auf den Gegenkopplungseingang des Regelverstärkers V geführt. An den Ausgang des Regelverstärkers V ist ein Schalter S angeschlossen, über den der Regelverstärkerausgang mit einem festen Bezugspotential, z.B. mit Massepotential, verbindbar ist. Dieser Schalter S kann beispielsweise ein Feldeffekttransistor sein, der mittels eines steuerbaren Austastimpulsgenerators AG ein- und ausschaltbar ist. Der Schalter S zur Unterbrechung der Regelschleife kann natürlich auch an anderer Stelle angeordnet sein, beispielsweise als Längsschalter zwischen Ausgang und Gegenkopplungseingang des Regelverstärkers. Während der Dauer des D2-Anteils oder etwas kürzer, ca. 10 $\mu$s, wird dieser Schalter S gesperrt ansonsten leitend gesteuert.

Die Regelschleife wird also während des Auftretens des MAC-Anteils unterbrochen und der Eingang der Spitzenwertdetektoren SD1 und SD2 auf Massepotential geschaltet. Während der Austastung des MAC-Anteils wird das Regelsignal durch die Wirkung des Integrators IG annähernd auf dem vorherigen Wert gehalten. Durch diese Maßnahme kann der ebenfalls an den Ausgang des Regelverstärkers RV angeschlossene, beispielsweise aus Rundfunktechnische Mitteilungen, Jahrgang 29 (1985) Heft 5, Seite 232, bekannte Duobinär-Binärwandler DB optimal arbeiten. Durch die Austastung des MAC-Anteils und Regelung auf den Mittelwert des positiven und negativen Spitzenwertes des D2-Signals liegt das D2-Signal an den Eingängen der beiden Komparatoren K1 und K2 immer symmetrisch zu den Entscheiderschwellen E1 und E2. Die Ausgangssignale der beiden Komparatoren sind über ein EXOR-Gatter miteinander verknüpft. An dessen Ausgang erscheinen die wiedergewonnenen Binärinformationen unverfälscht. MAC-Anteile, deren Amplitude größer ist als die Amplitude des D2-Anteils führen nicht zu einer unsymmetrischen Lage des Datenbursts gegenüber den Entscheiderschwellen und einer damit verbundenen Verschlechterung der Bitfehlerrate.

Die Nachsteuerung des Austastimpulsgenerators AG erfolgt so, daß die Signalaustastung auf den Datenburst synchronisiert wird. Dazu sind eine PLL-Phasenregelschleife am Ausgang des Duobinär-Binärwandlers DB vorgesehen und ein Bildsynchronwortdetektor BS.

Die Phasenregelschleife PLL regeneriert den Takt $f_{cl} = 10,125$ MHz des binär gewandelten D2-Signals. Der Bildsynchronwortdetektor BS detektiert das 64 bit Bildsynchronwort in Zeile 625. Sein Ausgangsimpuls wird in der Verzögerungsstufe VZ bis zum Beginn der Zeile 1 verzögert. Der verzögerte Puls startet den Zähler Z mit einem Ausgangssignal $f_H$, der den Takt $f_{cl}$ durch 648 teilt und somit ein zeilenfrequentes und mit dem Beginn jeder Zeile synchrones Signal liefert, das den Austastimpulsgenerator AG steuert.

Der Austastimpuls schaltet den Schalter S so, daß der MAC-Anteil am Eingang von SD1 und SD2 ausgetastet wird und nur der D2-Anteil oder ein Teil des D2-Anteils an SD1, SD2 anliegt (Zeitabschnitt a Figur 1). Der Widerstand R entkoppelt den Ausgang des Regelverstärkers RV vom Eingang der Spitzenwertdetektoren SD1 und SD2 und verhindert einen Kurzschluß des Ausgangs des Regelverstärkers RV durch den Schalter S. Außerdem tastet der Austastimpuls die Phasenregelschleife PLL so, daß sie nur nachsynchronisiert wird, wenn der Datenburst an ihrem Eingang anliegt.

Nach Anlegen eines D2-MAC-Signals erfolgt die Synchronisierung folgendermaßen:
Der PLL-Taktgenerator - PLL mit einem spannungsgesteuerten Quarzoszillator VCXO - arbeitet zunächst unsynchronisiert und erzeugt ein nichtsynchrones, zeilenfrequentes Austastsignal

$$f_H = \frac{f_{cl}}{648}.$$

Mit diesem Signal wird das am Eingang der Spitzenwertdetektoren SD1 und SD2 anliegende D2-MAC-Signal getastet. Aufgrund der Differenzfrequenz zwischen dem spannungsgesteuerten Quarzoszillator VCXO der PLL und der Taktfrequenz des empfangenen D2-Signalanteiles driftet die Austastung des MAC-Signals gegenüber dem D2-MAC-Signal bis Austastsignal und MAC-Anteil zeitlich zusammenfallen.

Da die Frequenzdifferenz sehr gering ist, z.B. ca. ± 500 Hz bei $f_{cl} = 10,125$ MHz hat die Regelschleife der Hüllkurvenregelung - Spitzenwertdetektoren SD1 und SD2, Integrator IG, Verstärker Vst, Regelverstärker RV - genügend Zeit, einzuschwingen und das D2-Signal zu zentrieren. Nun kann der Bildsynchronwortdetektor BS das Bildsynchronwort erkennen und den Austastimpulsgenerator AG synchronisieren.

Gleichzeitig wird das synchrone Austastsignal der PLL zugeführt und verbindet diese während des Zeitabschnitts ≤ a (Figur 1) mit dem am Ausgang des Duobinär-Binärwandlers DB anstehenden Binärsignals, das die PLL frequenz- und phasenmäßig synchronisiert.

## Patentansprüche
## Patentansprüche für folgende Vertragsstaaten : AT, BE, CH, LI, LU, NL

1. Verfahren zum Wiedergewinnen von Binärinformationen (DB) aus einem störbehafteten Basisbandsignal, welches aus einem ursprünglich zu seiner Grundlinie symmetrischen Datenburst und einem weiteren Signalanteil zusammengesetzt ist, dessen Amplitude größere unsymmetrische Werte annehmen kann als der Datenburst, dadurch gekennzeichnet, daß eine Spitzenwertdetektion (SD1, SD2) des Datenbursts bezüglich positiver und negativer Amplitudenwerte vorgenommen wird, daß aus der Spitzenwertdetektion ein Regelsignal (V) abgeleitet wird, mittels dessen der Mittelwert zwischen positivem und negativem Amplitudenspitzenwert des Datenbursts auf einen vorgegebenen Bezugswert geregelt wird, und daß das Regelsignal (V) für die Zeiten, in denen Amplitudenwerte auftreten, die höher sind als die Amplitudenwerte des Datenbursts, annähernd auf dem vorherigen Wert gehalten wird.

2. Verfahren nach Anspruch 1, insbesondere zum Wiedergewinnen von Binärinformationen aus einem trägerverwischten und verrauschten D2-MAC-Signal, dadurch gekennzeichnet, daß vor der Spitzenwertdetektion (SD1, SD2) eine Signalaustastung (S) zumindest für die Dauer des MAC-Anteils vorgenommen wird.

3. Verfahren nach Anspruch 2, dadurch gekennzeichnet, daß die Signalaustastung (S) auf die Datenburstauswertung synchronisiert wird.

4. Anordnung zum Durchführen des Verfahrens nach einem der Ansprüche 1 bis 3, gekennzeichnet durch
   - einen Regelverstärker (V), dessen Verstärkungseingang das störbehaftete Basisbandsignal / trägerverwischte und verrauschte D2-MAC-Signal zuführbar ist,
   - einen Duobinärdecoder (DB) am Ausgang des Regelverstärkers (V),
   - Spitzenwertdetektoren (SD1, SD2) für jeweils positive und negative Signalanteile des Basisbandsignals / D2-MAC-Signals am Ausgang des Regelverstärkers (V),
   - einen Addierer (ADD) zur Verknüpfung der Spitzenwertdetektorausgangssignale,
   - einen Integrator (IG) am Ausgang des Addierers (ADD),
   - eine Verbindungsleitung vom Ausgang des Integrators (IG) zum Gegenkopplungseingang des Regelverstärkers (V),
   - einen Schalter (S) zur Unterbrechung der Regelschleife des Regelverstärkers (V) für die Zeit des Auftretens des weiteren Signalanteils / MAC-Anteils.

5. Anordnung nach Anspruch 4, gekennzeichnet durch
   - einen steuerbaren Austastimpulsgenerator (AG) zur Ein/Ausschaltung des Schalters (S),
   - eine Phasenregelschleife (PLL) zur Taktrückgewinnung am Ausgang des Duobinär-Binärwandlers (DB),
   - einen Bildsynchronwortdetektor (BS) am Ausgang des Duobinär-Binärwandlers (DB),
   - eine Verzögerungsstufe (VZ) am Ausgang des Bildsynchronwortdetektors (BS) zur Verzögerung des Ausgangsimpulses des Bildsynchronwortdetektors (BS),
   - einen Zähler (Z) zur Zeilenfrequenzableitung ($f_H$), welcher zur Steuerung des Austastimpulsgenerators (AG) vorgesehen ist.

## Patentansprüche für folgende Vertragsstaaten : DE, FR, GB, IT, SE

1. Verfahren zum Wiedergewinnen von Binärinformationen (DB) aus einem störbehafteten Basisbandsignal, welches aus einem ursprünglich zu seiner Grundlinie symmetrischen Datenburst und einem weiteren Signalanteil zusammengesetzt ist, dessen Amplitude größere unsymmetrische Werte annehmen kann als der Datenburst, dadurch gekennzeichnet, daß eine Spitzenwertdetektion (SD1, SD2) des Datenbursts bezüglich positiver und negativer Amplitudenwerte vorgenommen wird, daß aus der Spitzenwertdetektion (SD1, SD2) ein Regelsignal (V) abgeleitet wird, mittels dessen der Mittelwert zwischen positivem und negativem Amplitudenspitzenwert des Datenbursts auf einen vorgegebenen Bezugswert geregelt wird, daß das Regelsignal (V) für die Zeiten, in denen Amplitudenwerte auftreten, die höher sind als die Amplitudenwerte des Datenbursts, annähernd auf dem vorherigen Wert gehalten wird und daß vor der Spitzenwertdetektion (SD1, SD2) eine Signalaustastung (S) im Basisbandsignal zumindest für die Dauer seines MAC-Anteils vorgenommen wird.

2. Verfahren nach Anspruch 1, dadurch gekennzeichnet, daß die Signalaustastung (S) auf die Datenburstauswertung synchronisiert wird.

3. Anordnung zum Durchführen des Verfahrens nach einem der Ansprüche 1 oder 2, gekennzeichnet durch

- einen Regelverstärker (V), dessen Verstärkungseingang das störbehaftete Basisbandsignal / trägerverwischte und verrauschte D2-MAC-Signal zuführbar ist,
- einen Duobinärdecoder (DB) am Ausgang des Regelverstärkers (V),
- Spitzenwertdetektoren (SD1, SD2) für jeweils positive und negative Signalanteile des Basisbandsignals / D2-MAC-Signals am Ausgang des Regelverstärkers (V),
- einen Addierer (ADD) zur Verknüpfung der Spitzenwertdetektorausgangssignale,
- einen Integrator (IG) am Ausgang des Addierers (ADD),
- eine Verbindungsleitung vom Ausgang des Integrators (IG) zum Gegenkopplungseingang des Regelverstärkers (V),
- einen Schalter (S) zur Unterbrechung der Regelschleife des Regelverstärkers (V) für die Zeit des Auftretens des weiteren Signalanteils / MAC-Anteils.

4. Anordnung nach Anspruch 3, gekennzeichnet durch

- einen steuerbaren Austastimpulsgenerator (AG) zur Ein/Ausschaltung des Schalters (S),
- eine Phasenregelschleife (PLL) zur Taktrückgewinnung am Ausgang des Duobinär-Binärwandlers (DB),
- einen Bildsynchronwortdetektor (BS) am Ausgang des Duobinär-Binärwandlers (DB),
- eine Verzögerungsstufe (VZ) am Ausgang des Bildsynchronwortdetektors (BS) zur Verzögerung des Ausgangsimpulses des Bildsynchronwortdetektors (BS),
- einen Zähler (Z) zur Zeilenfrequenzableitung ($f_H$), welcher zur Steuerung des Austastimpulsgenerators (AG) vorgesehen ist.

**Claims**

**Claims for the following Contracting States :**
**AT, BE, CH, LI, LU, NL**

1. Method for the recovery of binary information data (DB) from a base band signal which is affected by interference and composed of a data burst which was originally symmetrical to its base line and of a further signal component, the amplitude of which can assume greater asymmetric values than the data burst, characterised thereby, that a peak value detection (SD1, SD2) of the data burst is undertaken in respect of positive and negative amplitude values, that a regulating signal (V), by means of which the mean value between the positive and the negative amplitude peak value of the data burst is regulated to a preset reference value, is derived from the peak value detection and that the regulating signal (V) is kept at approximately the previous value of the data burst for the times in which amplitude values occur which are higher than the amplitude values of the data burst.

2. Method according to claim 1, in particular for the recovery of binary information data from a noise-laden D2-MAC signal blurred in carrier, characterised thereby, that a signal blanking (S) is undertaken for at least the duration of its MAC component before the peak value detection (SD1, SD2).

3. Method according to claim 2, characterised thereby, that the signal blanking (S) is synchronised with the data burst evaluation.

4. Arrangement for the performance of the method according to one of the claims 1 to 3, characterised by

- a regulating amplifier (V), to the amplification input of which the base band signal affected by interference or the noise-laden D2-MAC signal blurred in carrier are feedable,
- a duo-binary decoder (DB) at the output of the regulating amplifier (V),
- peak value detectors (SD1, SD2) respectively for positive and negative signal components of the base band signal/D2-MAC signal at the output of the regulating amplifier (V),
- an adder (ADD) for the interlinking of the peak value detector output signals,
- an integrator (IG) at the output of the adder (ADD),
- a connecting line from the output of the integrator (IG) to the negative feedback input of the regulating amplifier (V) and
- a switch (S) for the interruption of the regulating loop of the regulating amplifier (V) for the time of the occurrence of the further signal component/MAC component.

5. Arrangement according to claim 4, characterised by
   - a controllable blanking pulse generator (AG) for switching the switch (S) on or off,
   - a pulse-regulating loop (PLL) for the clock pulse recovery at the output of the duo-binary converter (DB),
   - a frame-synchronous word detector (BS) at the output of the duo-binary converter (DB),
   - a delay stage (VZ) at the output of the frame-synchronous word detector (BS) for the delay of the output pulse of the frame-synchronous word detector (BS) and
   - a counter (Z) for the line frequency derivation ($f_H$) and provided for the control of the blanking pulse generator (AG).

**Claims for the following Contracting States : DE, FR, GB, IT, SE**

1. Method for the recovery of binary information data (DB) from a base band signal which is affected by interference and composed of a data burst which was originally symmetrical to its base line and of a further signal component, the amplitude of which can assume greater asymmetric values than the data burst, characterised thereby, that a peak value detection (SD1, SD2) of the data burst is undertaken in respect of positive and negative amplitude values, that a regulating signal (V), by means of which the mean value between the positive and the negative amplitude peak value of the data burst is regulated to a preset reference value, is derived from the peak value detection (SD1, SD2), that the regulating signal (V) is kept at approximately the previous value of the data burst for the times in which amplitude values occur which are higher than the amplitude values of the data burst and that a signal blanking (S) in the base band signal is undertaken for at least the duration of its MAC component before the peak value detection (SD1, SD2).

2. Method according to claim 1, characterised thereby, that the signal blanking (S) is synchronised with the data burst evaluation.

3. Arrangement for the performance of the method according to one of the claims 1 and 2, characterised by
   - a regulating amplifier (V), to the amplification input of which the base band signal affected by interference or the noise-laden D2-MAC signal blurred in carrier is feedable,
   - a duo-binary decoder (DB) at the output of the regulating amplifier (V),
   - peak value detectors (SD1, SD2) respectively for positive and negative signal components of the base band signal/D2-MAC signal at the output of the regulating amplifier (V),
   - an adder (ADD) for the interlinking of the peak value detector output signals,
   - an integrator (IG) at the output of the adder (ADD),
   - a connecting line from the output of the integrator (IG) to the negative feedback input of the regulating amplifier (V) and
   - a switch (2) for the interruption of the regulating loop of the regulating amplifier (V) for the time of the occurrence of the further signal component/MAC component.

4. Arrangement according to claim 3, characterised by
   - a controllable blanking pulse generator (AG) for switching the switch (S) on or off,
   - a pulse-regulating loop (PLL) for the clock pulse recovery at the output of the duo-binary converter (DB),
   - a frame-synchronous word detector (BS) at the output of the duo-binary converter (DB),
   - a delay stage (VZ) at the output of the frame-synchronous word detector (BS) for the delay of the output pulse of the frame-synchronous word detector (BS) and
   - a counter (Z) for the line frequency derivation ($f_H$) and provided for the control of the blanking pulse generator (AG).

**Revendications**
**Revendications pour les Etats contractants suivants : AT, BE, CH, LI, LU, NL.**

1. Procédé pour récupérer des informations binaires (DB) d'un signal en bande de base perturbé, qui est constitué d'un paquet de données au départ symétrique par rapport à la ligne de base du signal et d'une autre partie dont l'amplitude peut prendre des valeurs dissymétriques supérieurs à celles du paquet de données, caractérisé en ce qu'il comprend la détection des crêtes (SD1, SD2) des amplitudes positives et négatives du paquet de données, qu'un signal de réglage (V) est tiré de la détection de crêtes (SD1, SD2), signal de réglage au moyen duquel la valeur moyenne entre la crête d'amplitude positive et la crête d'amplitude négative du paquet de données est réglée à une valeur de référence préfixée et que le signal de réglage (V) est maintenu approximativement à la valeur précédente pendant les temps où apparaissent des amplitudes dépassant les amplitudes du paquet de données.

2. Procédé selon la revendication 1, notamment pour récupérer des informations binaires d'un signal D2 MAC affecté d'un étalement de porteuse et bruiteux, caractérisé en ce que, avant la détection de crêtes (SD1, SD2), une suppression de signal (S) est effectuée, tout au moins pendant la durée de la partie MAC.

3. Procédé selon la revendication 2, caractérisé en ce que la supression de signal (S) synchronisée sur l'exploitation du paquet de données.

4. Dispositif pour la mise en oeuvre du procédé selon une des revendications 1 à 3, caractérisé par
   - un amplificateur de réglage (V), à l'entrée duquel peut être appliqué le signal en bande de base perturbé, constitué notamment par un signal D2 MAC affecté d'un étalement de porteuse et bruiteux,
   - un décodeur duobinaire (DB) à la sortie de l'amplificateur de réglage (V),
   - des détecteurs de crêtes (SD1, SD2) pour, respectivement, des parties de signal positives et négatives du signal en bande de base perturbé, notamment du signal D2 MAC, à la sortie de l'amplificateur de réglage (V),
   - un additionneur (ADD) pour combiner les signaux de sortie des détecteurs de crêtes,
   - un intégrateur (IG) à la sortie de l'additionneur (ADD),
   - une ligne de liaison allant de la sortie de l'intégrateur (IG) à l'entrée de contre-couplage de l'amplificateur de réglage (V),
   - un interrupteur (S) pour couper la boucle de réglage de l'amplificateur de réglage (V) pendant le temps d'apparition de l'autre partie du signal, constituée notamment par la partie MAC d'un signal D2 MAC.

5. Dispositif selon la revendication 4, caractérisé par
   - un générateur d'impulsions de suppression (AG) commande pour fermer/ouvrir l'interrupteur (S),

   - une boucle de réglage de phase (PLL) pour la récupération de l'horloge à la sortie du convertisseur duobinaire-binaire (DB),
   - un détecteur de mot de synchronisation d'image (BS) à la sortie du convertisseur duobinaire-binaire (DB),
   - un étage de retard (VZ) à la sortie du détecteur de mot de synchronisation d'image (BS) pour retarder l'impulsion de sortie de ce détecteur (BS) et
   - un compteur (Z) pour dériver la fréquence de ligne ($f_H$) prévue pour commander le générateur d'impulsions de suppression (AG).

**Revendications pour les Etats contractants suivants : DE, FR, GB, IT, SE**

1. Procédé pour récupérer des informations binaires (DB) d'un signal en bande de base perturbé, qui est constitué d'un paquet de données au départ symétrique par rapport à la ligne de base du signal et d'une autre partie dont l'amplitude peut prendre des valeurs dissymétriques supérieures à celles du paquet de données, caractérisé en ce qu'il comprend la détection des crêtes (SD1, SD2) des amplitudes positives et négatives du paquet de données, qu'un signal de réglage (V) est tiré de la détection de crêtes (SD1, SD2), signal de réglage au moyen duquel la valeur moyenne entre la crête d'amplitude positive et la crête d'amplitude négative du paquet de données est réglée à une valeur de référence préfixée, que le signal de réglage (V) est maintenu approximativement à la valeur précédente pendant les temps où apparaissent des amplitudes dépassant les amplitudes du paquet de données et que, avant la détection de crêtes (SD1, SD2), une suppression de signal (S) est effectuée dans le signal en bande de base, tout au moins pendant la durée de sa partie MAC.

2. Procédé selon la revendication 1, caractérisé en ce que la suppression de signal (S) est synchronisée sur l'exploitation du paquet de données.

3. Dispositif pour la mise en oeuvre du procédé selon la revendication 1 ou 2, caractérisé par
   - un amplificateur de réglage (V), à l'entrée duquel peut être appliqué le signal en bande de base perturbé, constitué notamment par un signal D2 MAC affecté d'un étalement de porteuse et bruiteux,
   - un décodeur duobinaire (DB) à la sortie de l'amplificateur de réglage (V),

- des détecteurs de crêtes (SD1, SD2) pour, respectivement, des parties de signal positives et négatives du signal en bande de base perturbé, notamment du signal D2 MAC, à la sortie de l'amplificateur de réglage (V),
- un additionneur (ADD) pour combiner les signaux de sortie des détecteurs de crêtes,
- un intégrateur (IG) à la sortie de l'additionneur (ADD),
- une ligne de liaison allant de la sortie de l'intégrateur (IG) à l'entrée de contre-couplage de l'amplificateur de réglage (V) et
- un interrupteur (S) pour couper la boucle de réglage de l'amplificateur de réglage (V) pendant le temps d'apparition de l'autre partie du signal, constituée notamment par la partie MAC d'un signal D2 MAC.

4.  Dispositif selon la revendication 3, caractérisé par
- un générateur d'impulsions de suppression (AG) commandé pour fermer/ouvrir l'interrupteur (S),
- une boucle de réglage de phase (PLL) pour la récupération de l'horloge à la sortie du convertisseur duobinaire-binaire (DB),
- un détecteur de mot de synchronisation d'image (BS) à la sortie du convertisseur duobinaire-binaire (DB),
- un étage de retard (VZ) à la sortie des détecteurs de mot de synchronisation d'image (BS) pour retarder l'impulsion de sortie de ce détecteur (BS) et
- un compteur (Z) pour dériver la fréquence de ligne ($f_H$) prévue pour commander le générateur d'impulsions de suppression (AG).

FIG. 1

EP 0 305 772 B1

# FIG. 2